# EUROPEAN PATENT APPLICATION

(11) **EP 4 455 583 A1**
(43) Date of publication of application: **30.10.2024**
(21) Application number: 24172841.9
(22) Date of filing: 26.04.2024
(51) Int. Cl.: F25D 11/00, F25B 47/02

(54) **TRANSPORT REFRIGERATION UNIT WITH MULTIPLE HEATING MODES AND REFRIGERANT-BASED DEFROST CONTROL**

(30) Priority: 27.04.2023 US 202363498694 P
(71) Applicant: Carrier Corporation, Palm Beach Gardens, FL 33418 (US)
(72) Inventor: SENF, JR., Raymond, East Syracuse, New York, 13057 (US); SCARCELLA, Jason, East Syracuse, New York, 13057 (US)
(74) Representative: Dehns

(57) **Abstract**

A transport refrigeration unit (TRU) is disclosed. The TRU comprises a variable speed compressor, and an electric heater configured upstream and/or downstream of evaporator coils associated with an evaporator of the TRU, wherein an outlet of the compressor is fluidically connected to the evaporator coils and a condenser of the TRU.

## Description

This patent application claims the benefit of US Provisional Patent Application No. 63/498,694, filed on Apr 27, 2023, which is incorporated by reference herein in its entirety.

This invention relates to transport refrigeration units, and more particularly, to a transport refrigerant unit with multi-heating mode and refrigerant-based defrost control.

According to a first aspect of the invention there is provided a transport refrigeration unit (TRU) as recited in claim 1. The TRU comprises a variable speed compressor, and an electric heater configured upstream and/or downstream of evaporator coils associated with an evaporator of the TRU, wherein an outlet of the compressor is fluidically connected to the evaporator coils and a condenser of the TRU.

Optionally, the TRU comprises one or more fans configured upstream and/or downstream of the evaporator and/or the electric heater, wherein the one or more fans are configured to facilitate flow of air through the evaporator and the electric heater.

Optionally, in a first heating mode, the TRU is configured to circulate hot refrigerant from the compressor to the evaporator coils and further enable the one or more fans to supply the air comprising return air towards a storage space while passing the air across the hot refrigerant-carrying evaporator coils to heat the air to a first temperature and further supply the heated air into the storage space.

Optionally, in a second heating mode, the TRU is configured to actuate the electric heater and further enable the one or more fans to supply the air comprising return air towards the storage space while passing the air across the electric heater to heat the air to a second temperature and further supply the heated air into the storage space.

Optionally, in a third heating mode, the TRU is configured to circulate hot refrigerant from the compressor to the evaporator coils and actuate the electric heater, and further enable the one or more fans to supply the air comprising return air toward the storage space while passing the air across the hot refrigerant-carrying evaporator coils and the electric heater to heat the air to a third temperature and further supply the heated air into the storage space.

Optionally, in a defrost mode, the TRU is configured to circulate hot refrigerant from the compressor to the evaporator through a drain pan heater associated with the evaporator to enable defrosting of the drain pan and the evaporator coils.

Optionally, in a cooling mode, the TRU is configured to circulate refrigerant from the compressor to the condenser, through the expansion device and the evaporator, and then return to the compressor, and enable the one or more fans to supply the air comprising return air towards the storage space while passing the air across the refrigerant-carrying evaporator coils to cool the air to a fourth temperature and further supply the cool air into the storage space.

Optionally, the compressor is fluidically connected to the condenser, and the drain pan heater and/or the evaporator coils associated with the evaporator by a three-way valve.

Optionally, the TRU comprises a controller in communication with the electric heater, a motor of the compressor, the one or more fans, the expansion device, and a battery associated with the TRU.

Optionally, the controller is configured to adjust speed of the compressor and/or adjust heating level of the electric heater based on one or more of a predefined temperature to be maintained at the storage space, ambient temperature, switching time between one or more heating modes and the cooling mode, defrosting speed of the evaporator coils, and a state of charge of the battery.

According to a second aspect of the invention there is provided a refrigeration circuit of a transport refrigeration unit (TRU). The refrigeration circuit comprises a variable speed compressor, a condenser downstream of the compressor, an expansion device downstream of the condenser, an evaporator downstream of the expansion device, and an electric heater configured upstream and/or downstream of the evaporator coils associated with the evaporator, wherein an outlet of the compressor is fluidically connected to the condenser, and evaporator coils of the evaporator.

Optionally, the refrigeration circuit comprises one or more fans configured upstream and/or downstream of the evaporator and the electric heater, wherein the one or more fans are configured to facilitate flow of air through the evaporator and the electric heater.

Optionally, in a first heating mode, the refrigeration circuit is configured to circulate hot refrigerant from the compressor to the evaporator coils and further enable the one or more fans to supply the air comprising return air towards a storage space associated with a trailer while passing the air across the hot refrigerant-carrying evaporator coils to heat the air to a first temperature and supply the heated air into the storage space.

Optionally, in a second heating mode, the refrigeration circuit is configured to actuate the electric heater and further enable the one or more fans to supply the air comprising return air towards a storage space associated with a trailer while passing the air across the electric heater to heat the air to a second temperature and supply the heated air into the storage space.

Optionally, in a third heating mode, the refrigeration circuit is configured to circulate hot refrigerant from the compressor to the evaporator coils and actuate the electric heater, and further enable the one or more fans to supply the air comprising return air towards a storage space associated with a trailer while passing the air across the hot refrigerant-carrying evaporator coils and the electric heater to heat the air to a third temperature and further supply the heated air into the storage space.

Optionally, in a defrost mode, the refrigeration circuit is configured to circulate hot refrigerant from the compressor to the evaporator through a drain pan heater associated with the evaporator to enable defrosting of the drain pan and the evaporator coils.

Optionally, in a cooling mode, the refrigeration circuit is configured to circulate refrigerant from the compressor to the condenser, through the expansion device and the evaporator, and then return to the compressor, and enable the one or more fans to supply the air comprising return air towards a storage space associated with a trailer while passing the air across the refrigerant-carrying evaporator coils to cool the air to a fourth temperature and further supply the cool air into the storage space.

Optionally, the compressor is fluidically connected to the condenser, and the drain pan heater and/or the evaporator coils associated with the evaporator by a three-way valve.

Optionally, the refrigeration circuit comprises a controller in communication with the electric heater, a motor of the compressor, the one or more fans, the expansion device, and a battery associated with the TRU, wherein the controller is configured to adjust speed of the compressor and/or adjust heating level of the electric heater based on one or more of a predefined temperature to be maintained at the storage space, ambient temperature, switching time between one or more heating modes and the cooling mode, defrosting speed of the evaporator coils, and a state of charge of the battery.

The transport refrigeration unit of the first aspect of the invention may comprise a refrigeration circuit as recited herein with reference to the second aspect of the invention, and may comprise any of the features recited in respect thereof. The refrigeration circuit of the second aspect of the invention may be an element of the transport refrigeration unit of the first aspect of the invention, and therefore may comprise any of the features recited herein with reference to the transport refrigeration unit of the first aspect of the invention.

The foregoing summary is illustrative only and is not intended to be in any way limiting. In addition to the illustrative aspects, embodiments, and features described above, further aspects, embodiments, features, and techniques of the subject disclosure will become more apparent from the following description taken in conjunction with the drawings.

The accompanying drawings are included to provide a further understanding of the subject disclosure and are incorporated in and constitute a part of this specification. The drawings illustrate exemplary embodiments of the subject disclosure and, together with the description, serve to explain the principles of the subject disclosure.

In the drawings, similar components and/or features may have the same reference label. Further, various components of the same type may be distinguished by following the reference label with a second label that distinguishes among the similar components. If only the first reference label is used in the specification, the description is applicable to any one of the similar components having the same first reference label irrespective of the second reference label.
FIG. 1 illustrates an exemplary representation of the refrigeration circuit associated with a transport refrigeration unit (TRU) or a refrigeration system, in accordance with one or more embodiments of the subject disclosure.
FIG. 2 illustrates an exemplary block diagram of the defrost control system implemented in the refrigeration circuit of FIG. 1, in accordance with one or more embodiments of the subject disclosure.
FIG. 3 illustrates an exemplary representation of the TRU of FIG. 1 and 2 configured with a trailer of a cargo truck, in accordance with one or more embodiments of the subject disclosure.

The following is a detailed description of embodiments of the disclosure depicted in the accompanying drawings. The embodiments are in such detail as to clearly communicate the disclosure. However, the amount of detail offered is not intended to limit the anticipated variations of embodiments; on the contrary, the intention is to cover all modifications, equivalents, and alternatives falling within the spirit and scope of the subject disclosure as defined by the appended claims.

Various terms are used herein. To the extent a term used in a claim is not defined below, it should be given the broadest definition persons in the pertinent art have given that term as reflected in printed publications and issued patents at the time of filing.

In the specification, reference may be made to the spatial relationships between various components and to the spatial orientation of various aspects of components as the devices are depicted in the attached drawings. However, as will be recognized by those skilled in the art after a complete reading of the subject disclosure, the components of this invention. described herein may be positioned in any desired orientation. Thus, the use of terms such as "above," "below," "upper," "lower," "first", "second" or other like terms to describe a spatial relationship between various components or to describe the spatial orientation of aspects of such components should be understood to describe a relative relationship between the components or a spatial orientation of aspects of such components.

Transport refrigeration units (TRUs) or heating, ventilation, and air conditioning (HVAC) systems may involve an electric heater for heating a space in low ambient conditions. In addition, the TRU and HVAC systems may involve hot refrigerant-based heating/defrost control which may facilitate in defrosting of the evaporator coils of the TRU as well as minimize residual heat gain in the space. However, there is a need to improve the existing TRUs and HVAC systems by configuring both the electric heater and refrigerant-based heating/defrosting control in TRUs and HVAC systems, which may allow the TRUs and HVAC systems to operate in multi-heating mode as well as defrost mode in a power efficient, automated, and cost-effective manner.

This invention overcomes the above-mentioned shortcomings and limitations associated with the existing heating and defrosting solutions being implemented in TRUs or HVAC systems, by providing an improved, automated, and efficient TRU or HVAC system and a refrigeration circuit thereof that provides multi-heating mode and refrigerant-based defrost control. The TRU or HVAC system may operate in multi-heating mode as well as defrost mode based on one or more of a temperature to be maintained at the space, ambient conditions, switching time between one or more heating modes and a cooling mode, defrosting time for the evaporator coils, and a state of charge of a battery associated with the TRU or HVAC system.

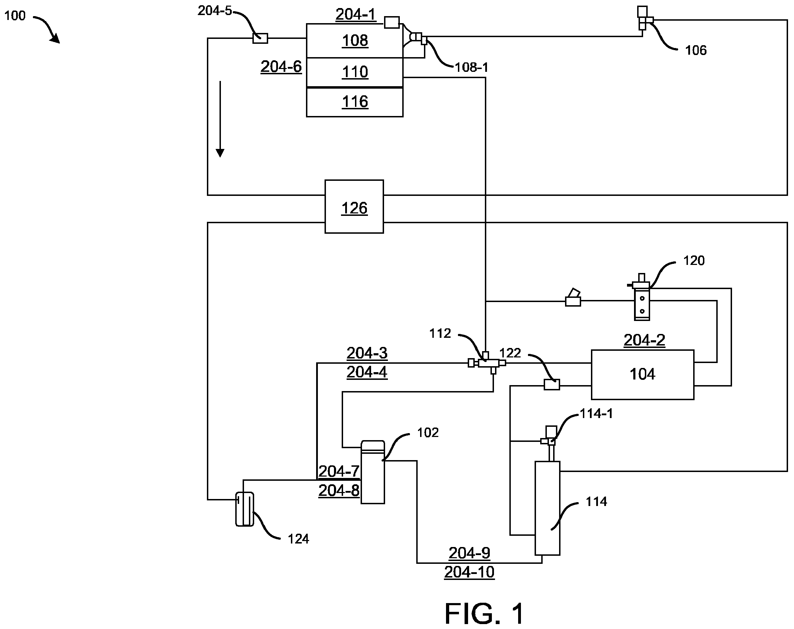

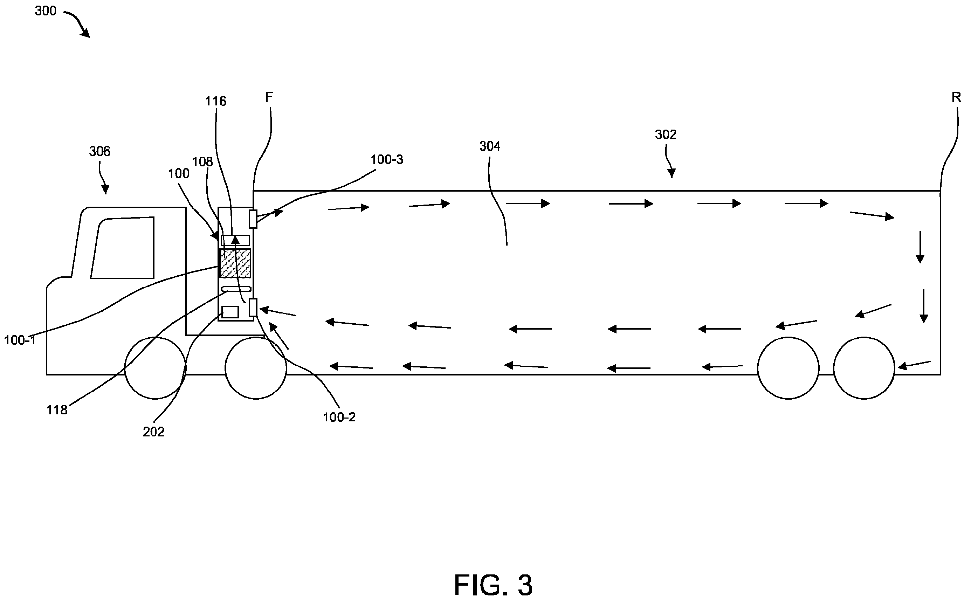

Referring to FIGs. 1 to 3, the refrigeration circuit 100 associated with a transport refrigeration unit (TRU) or an HVAC system is disclosed, which provides a multi-heating mode and a refrigerant-based hot gas cycle defrost control. In one or more embodiments, as shown in FIG. 3, the refrigeration circuit 100 may be associated with the TRU (also designated as 100, herein) where the TRU 100 may be fluidically coupled to ambient and an enclosed (storage) space 304 of a container or a trailer 302 associated with a cargo-truck 300. The TRU 100 may be configured to maintain a predefined thermal environment within the space 304. The TRU 100 may include a housing 100-1 having an air inlet port 100-2 and an air outlet port 100-3. The air inlet port 100-2 may be fluidically connected to ambient and/or storage space 304 to receive return air, respectively. Further, the outlet port 100-3 of the TRU 100 may be fluidically connected to the storage space 304 of the container/trailer 302. The TRU may operate to ingress the supply air via the inlet port 100-2 and egress degrees air (also referred to as exhaust air) into the storage space 304 (at a higher or lower temperature compared to the ingressed air) via the outlet port 100-3. In one or more embodiments, the exhaust air from the TRU 100 may be warmer or hotter than the received air (return air) such that the TRU 100 may be employed to supply warm or hot air in the space 304 of the container or trailer 302. In other embodiments, the exhaust air from the TRU 100 may be cooler than the received air such that the TRU 100 may be employed to supply cool air in the container 302. The detailed construction and operation of the TRU and the refrigeration circuit are explained in subsequent paragraphs.

The refrigeration circuit or TRU 100 may include a compressor 102, a condenser 104 configured downstream of the compressor 102, an expansion device 106 configured downstream of the condenser 104, and an evaporator 108 configured downstream of the expansion device 106, enclosed within the housing 100-1 having the inlet port 100-2 and the outlet port 100-3. In addition, an outlet of the compressor 102 may be fluidically connected to the condenser 104, as well as the evaporator coils associated with the evaporator 108. In one or more embodiments, the compressor 102 may be a variable speed scroll compressor 102, however, other compressors such as reciprocating or screw compressors are possible without limiting the scope of the disclosure. A motor (not shown) may be used to drive the compressor 102. For example, a motor can be an integrated electric drive motor driven by a synchronous generator, a commercial power service an external power generation system (e.g., shipboard), a generator or the like. The compressor 102 may also be a multi-stage compression device.

Further, a drain pan associated with the evaporator 108 may be equipped with a drain pan heater 110 that may also be fluidically connected to the outlet of the compressor 102 such that the compressor 102 may circulate refrigerant either directly to the evaporator coils of the evaporator 108 or through the drain pan heater 110. The compressor 102 may be fluidically connected to the condenser 104, the drain pan heater 110, and/or the evaporator coils associated with the evaporator 108 by a three-way valve 112.

In addition, an electric heater 116 such as a resistive electric heater, or the like, may be configured upstream and/or downstream of evaporator coils of the evaporator 108. The TRU 100 may further include one or more fans 118 configured upstream and/or downstream of the evaporator 108 and/or the electric heater 116.

In one or more embodiments, referring back to FIG. 3, the TRU 100 may be coupled to the front end (F) of the container/trailer 302 with the outlet port 100-3 in fluidic communication with the storage space 304 of the container/trailer 302 and the inlet port 100-2 in fluidic communication with the ambient or the storage space 304. The trailer 302 may be coupled to a rear end of a cab or truck 306 such that a gap remains therebetween. The TRU 100 may be coupled to the front end (F) of the container/trailer 302 in the gap area between the cab 306 and container/trailer 302. Alternatively, the TRU 100 can be coupled to a prescribed position on a side or more than one side of the container/trailer 302. Moreover, a plurality of TRUs can be coupled to a single container/trailer 302. Alternatively, a single TRU can be coupled to a plurality of containers/trailers.

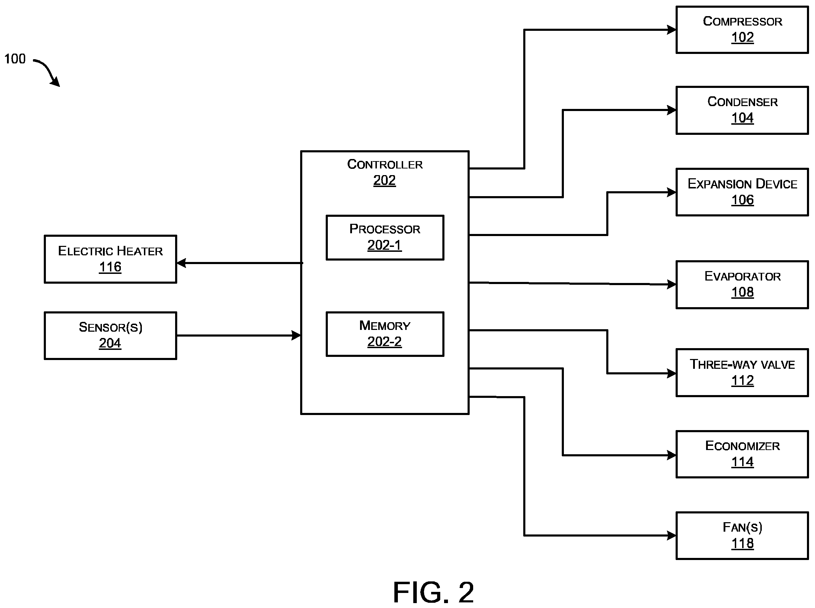

In one or more embodiments, the TRU 100 may operate in a single-stage heating mode, a two-stage heating mode, and/or a multi-stage heating mode. Referring back to FIGs. 1 and 2, in one or more embodiments, in a first heating mode, the refrigeration circuit or TRU 100 may keep the electric heater 116 switched OFF and circulate hot refrigerant from the compressor 102 to the evaporator 108. The hot refrigerant may be supplied through a distributor 108-1 associated with the evaporator 108 such that hot refrigerant may be effectively distributed among the evaporator coils. The refrigeration circuit or TRU 100 may further enable the fans 118 to receive the air comprising return air into the TRU 100 and pass the received air across the hot refrigerant-carrying evaporator coils to heat the air to a first temperature and further supplying the heated air into the storage space 304 via the outlet port 100-3 of the TRU 100.

In one or more embodiments, in a second heating mode, the refrigeration circuit or TRU 100 may restrict the operation of the compressor 102 and actuate (switch ON and operate) the electric heater 116 at a predefined heating (power) level. The refrigeration circuit or TRU 100 may further enable the fan(s) 118 to receive the air into the TRU 100 and pass the received air across the electric heater 116 to heat the air to a second temperature (may be higher or lower than the first temperature) and further supplying the heated air into the storage space 304.

In one or more embodiments, in a third heating mode, the refrigeration circuit or TRU 100 may be configured to circulate hot refrigerant from the compressor 102 to the evaporator 108 and also actuate the electric heater 116. The refrigeration circuit or TRU 100 may further enable the fan(s) 118 to supply the air into the TRU 100 and pass the received air across the hot refrigerant-carrying evaporator coils 108 as well as the electric heater 116 to heat the air to a third temperature and further supplying the heated air into the storage space 304. In one or more embodiments, the third temperature of the third heating mode may be greater than the first temperature attained in the first heating mode or the second temperature attained in the second heating mode.

In one or more embodiments, in a defrost mode or during a defrost cycle, the refrigeration circuit or TRU 100 may be configured to circulate hot refrigerant from the outlet of the compressor 102 to the evaporator coils directly or via the drain pan heater 110 to enable defrosting of the evaporator coils and/or the drain pan of the evaporator 108. During the defrost mode, the fan(s) and electric heater may or may not be switched OFF. The hot refrigerant may be supplied through a distributor 108-1 associated with the evaporator 108 such that hot refrigerant may be effectively distributed among the evaporator coils.

During the defrost mode, the temperature sensors that may be in thermal contact with the evaporator may continuously monitor the defrosting state of the evaporator coils. The refrigeration circuit 100 may terminate the defrosting of the evaporator 108 when the evaporator coils exceed a temperature indicative of a phase change or melting of ice formed on the evaporator coils or completion of defrosting of the evaporator coils. Further, the refrigeration circuit 100 may be switched from the defrost mode to cooling mode when the defrost cycle is completed or based on the one or more modes selected by users.

In one or more embodiments, the TRU or refrigeration circuit 100 may be configured to adjust the speed of the variable speed compressor 102 and/or adjust the heating level of the electric heater 116 based on one or more of predefined temperatures to be maintained at the storage space 304, ambient temperature, switching time between one or more heating modes and the cooling mode, defrosting speed of the evaporator coils, and a state of charge of the battery. For instance, in one or more embodiments, when a higher temperature (third temperature) is to be achieved at the storage space in a short duration or when the ambient temperature is low, the TRU may operate in the third heating mode. In addition, in one or more embodiments, when a moderate temperature (second temperature) is to be achieved at the storage space or when faster switching between a cooling cycle and heating cycle is to be achieved at the storage space, the TRU may operate in the second heating mode. Further, in one or more embodiments, for trim heating applications or small heating demand at the storage space, the TRU may operate in the first heating mode. The trim heating may be used to maintain the temperature of products being stored in the storage space within a permissible limit, especially in an event when the temperature of the products drops below the permissible limit. Furthermore, in one or more embodiments, when the SOC of the battery associated with the TRU is detected to be low, the TRU may operate in the first heating mode or the second heating mode to save electrical power and maintain the permissible temperature limit within the storage space.

In one or more embodiments, in the cooling mode or cooling cycle, the refrigeration circuit or TRU 100 may switch OFF the electric heater 116 and restrict the supply of hot refrigerant from the outlet of the compressor 102 to the evaporator 108. The refrigeration circuit or TRU 100 may further circulate the refrigerant from the compressor 102 to the condenser 104, through the expansion device 106 and the evaporator 108, and then return to the compressor 102. The detailed operation of the refrigeration circuit 100 in the cooling mode has been described later in the subsequent paragraphs.

In one or more embodiments, during a cooling cycle or cooling mode, high-temperature, high-pressure refrigerant vapor exiting the outlet of the compressor 102 may move to the condenser 104 that may include a plurality of condenser coils, which may receive air blown by a condenser fan (not shown). The condenser 104 may facilitate heat exchange between the refrigerant flowing within the condenser 104 coils and the received air to remove latent heat through the condenser 104, which may condense the refrigerant to a high-pressure/high-temperature liquid within the condenser coils. The high-pressure/high-temperature liquid refrigerant may flow to a receiver 120 that may provide storage for excess liquid refrigerant during low-temperature operations. Further, from the receiver 120, the refrigerant may flow to a filter drier 122 which may keep the refrigerant clean and dry.

The refrigeration circuit 100 may further include an economizer 114 fluidically configured between the compressor 102, the receiver 120, the evaporator 108, and the condenser 104. In one or more embodiments, the expansion device 106 may be an electronic evaporator expansion valve (EVXV). The economizer 114 may increase the refrigerant subcooling. When the economizer 114 is active, an injection solenoid valve (not shown) associated with the economizer 114 may open to allow refrigerant to pass through an auxiliary expansion valve 114-1 having a sensing bulb located upstream of an intermediate inlet port of the compressor 102. The injection solenoid valve may be controlled, responsive to the temperature measured at the bulb, and serve to expand and cool the refrigerant that proceeds into an economizer 114 counter-flow heat exchanger that may additionally sub-cool the liquid refrigerant.

The refrigerant may flow from the economizer heat exchanger of the economizer 114 to the electronic evaporator expansion valve (EVXV) 106. As the liquid refrigerant passes through the orifice of the EVXV 106, at least some of the liquid refrigerant may vaporize. The vaporized refrigerant may then enter the evaporator 108 via the distributor and then flow through the evaporator coils of the evaporator 108. The evaporator 108 may absorb heat from the air (e.g., return air returning from the storage space or ambient air) to vaporize some or all of the remaining liquid refrigerant in the evaporator 108. The air may preferably be drawn or pushed across the evaporator coils by at least one of the fans. The refrigerant vapor may be drawn from the evaporator 108 through a suction service valve back into the compressor 102 via an accumulator 124 that may store any excess refrigerant. Further, a heat exchanger 126 may be additionally configured in the refrigeration circuit 100 to facilitate heat transfer from a warm refrigerant supplied from the condenser 104 or the sub-cooled liquid from the economizer's heat exchanger to the cold refrigerant supplied by the evaporator 108 during the cooling cycle. Accordingly, the fan(s) 118 may enable the flow of the air (return air) through the TRU 100 while passing the air across the cold refrigerant-carrying evaporator coils to cool the air to a fourth temperature and further supply the cool air into the storage space 304 via the outlet port 100-3.

Referring to FIGs. 2 and 3, the refrigeration circuit 100 may include a controller 202 to control the operation of the TRU or refrigeration circuit 100. The controller 202 can include a processor 202-1 coupled to a memory 202-2 storing instructions executable by the processor 202-1 to enable the controller 202 to perform one or more designated operations. The memory 202-2 of the controller 202 may contain predefined values for various operating parameters within the trailer 302 of the TRU or the space 304 where the HVAC system is installed. The parameters may include but are not limited to, temperature set points for various locations within the container or the space, pressure limits, current limits, engine speed limits, and any variety of other desired operating parameters or limits with the TRU. The controller 202 may be in communication with the electric heater 116, a motor of the compressor 102, the fans 118, the expansion device 106, and a battery associated with the TRU 100.

In one or more embodiments, the controller 202 may be configured to adjust the speed of the variable speed compressor 102 and/or adjust the heating level of the electric heater 116 based on one or more of predefined temperatures to be maintained at the storage space 304, ambient temperature, switching time between one or more heating modes and the cooling mode, defrosting speed of the evaporator coils, and a state of charge of the battery. For instance, in one or more embodiments, when a higher temperature (third temperature) is to be achieved at the storage space in a short duration or when the ambient temperature is low, the controller may operate the TRU in the third heating mode. In addition, in one or more embodiments, when a moderate temperature (second temperature) is to be achieved at the storage space or when faster switching between a cooling cycle and heating cycle is to be achieved at the storage space, the controller may operate the TRU in the second heating mode. Further, in one or more embodiments, for trim heating applications or small heating demand at the storage space, the controller may operate the TRU in the first heating mode. Furthermore, in one or more embodiments, when the SOC of the battery associated with the TRU is detected to be low, the controller may operate the TRU in the first mode or the second mode to save electrical power and maintain the permissible temperature limit within the storage space.

In one or more embodiments, during the defrost mode, the controller 202 can enable the compressor 102 to circulate hot refrigerant from the outlet of the compressor 102 to the evaporator coils directly or via the drain pan heater 110 to enable defrosting of the evaporator coils and/or the drain pan of the evaporator 108.

In one or more embodiments, the controller 202 can include a communication module that can operatively couple the controller 202 to components of the refrigeration circuit 100 and enable the controller 202 to receive temperature inputs and pressure inputs from various points in the refrigeration circuit 100, AC inputs, DC inputs, voltage inputs, and humidity level inputs. In addition, the controller 202 can include an actuator, drive circuit, and relays to receive signals or current from the controller 202 and in turn control various external or peripheral devices in the TRU or refrigeration circuit 100.

The refrigeration circuit 100 can further include one or more sensors and/or transducers (collectively designated as 204 in FIG. 2) in communication with the controller 202. Referring back to FIG. 1, The sensors 204 can be a return air temperature (RAT) sensor 204-1 that can monitor the evaporator return air temperature, an ambient air temperature (AAT) sensor 204-2 that can monitor an ambient air temperature value (e.g., read in front of the condenser) associated with the condenser 104, a compressor suction temperature (CST) sensor 204-3 that can monitor compressor suction temperature, and a compressor discharge temperature (CDT) sensor 204-4 that can detect a compressor discharge temperature inside the dome of the compressor 102.

The refrigeration circuit 100 may include an evaporator outlet temperature (EVOT) sensor 204-5, and an evaporator outlet pressure (EVOP) sensor 204-6 that can detect an outlet temperature value and an evaporator outlet pressure of the evaporator 108. Further, the sensors 204 can include a compressor suction pressure (CSP) sensor 204-7 that can monitor a compressor suction value of compressor 102, a compressor discharge pressure (CDP) sensor 204-8 that can monitor a compressor discharge value of compressor 102. In addition, the sensors 204 may include an economizer outlet temperature (ECOT) sensor 204-9 and an economizer outlet pressure (ECOP) sensor 204-10 that can detect an outlet temperature value and an evaporator outlet pressure of the economizer 114.

Thus, this invention overcomes the drawbacks, and limitations associated with the existing space heating and evaporator defrosting solutions being implemented in HVAC systems or TRUs, by providing an improved, automated, and efficient TRU or HVAC system having multi-heating mode and refrigerant-based defrost control. The TRU or HVAC system may operate in multi-heating mode as well as defrost mode based on one or more of a temperature to be maintained at the space, ambient conditions, switching time between one or more heating modes and a cooling mode, defrosting time for the evaporator coils, and a state of charge of a battery associated with the TRUs or HVAC systems.

The use of variable speed scroll compressor 102 may allow operation of the compressor 102 at the reduced electrical power in the first heating mode or defrost mode, which may be used for lighter heating load demands such as but not limited to defrosting of the evaporator coils and for light trim heat overcooling events where the variable speed compressor may enable modulation of light heating loads. In addition, electric resistive heating by the electric heater 116 in the second mode or the third mode may allow space heating at a higher output in low ambient conditions, thereby offering enhanced heating operation independent of ambient temperature and environmental conditions. Moreover, the controller 202 may adaptively select the best heating mode in the TRU 100 based on the available SOC of the battery associated with the TRU 100, thereby making the TRU and refrigeration circuit 100 power efficient and reliable.

While the subject disclosure has been described with reference to exemplary embodiments, it will be understood by those skilled in the art that various changes may be made and equivalents may be substituted for elements thereof without departing from the scope of the subject disclosure as defined by the appended claims. Modifications may be made to adopt a particular situation or material to the teachings of the subject disclosure without departing from the scope thereof. Therefore, it is intended that the subject disclosure not be limited to the particular embodiment disclosed, but that the subject disclosure includes all embodiments falling within the scope of the subject disclosure as defined by the appended claims.

In interpreting the specification, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refer to at least one of something selected from the group consisting of A, B, C ....and N, the text should be interpreted as requiring only one element from the group, not A plus N, or B plus N, etc.

The following clauses recite features of the invention which may or may not currently be claim, and which may serve as basis for amendment(s) and/or a divisional application.
1. A transport refrigeration unit (TRU) comprising:
   a variable speed compressor; and
   an electric heater configured upstream and/or downstream of evaporator coils associated with an evaporator of the TRU,
   wherein an outlet of the compressor is fluidically connected to the evaporator coils and a condenser of the TRU.
2. The transport refrigeration unit of clause 1, wherein the TRU comprises one or more fans configured upstream and/or downstream of the evaporator and/or the electric heater, wherein the one or more fans are configured to facilitate flow of air through the evaporator and the electric heater.
3. The transport refrigeration unit of clause 1, wherein in a first heating mode, the TRU is configured to circulate hot refrigerant from the compressor to the evaporator coils and further enable the one or more fans to supply air comprising return air towards a storage space while passing the air across the hot refrigerant-carrying evaporator coils to heat the air to a first temperature and further supply the heated air into the storage space.
4. The transport refrigeration unit of clause 1, wherein in a second heating mode, the TRU is configured to actuate the electric heater and further enable the one or more fans to supply the air comprising return air towards the storage space while passing the air across the electric heater to heat the air to a second temperature and further supply the heated air into the storage space.
5. The transport refrigeration unit of clause 1, wherein in a third heating mode, the TRU is configured to circulate hot refrigerant from the compressor to the evaporator coils and actuate the electric heater, and further enable the one or more fans to supply the air comprising return air towards the storage space while passing the air across the hot refrigerant-carrying evaporator coils and the electric heater to heat the air to a third temperature and further supply the heated air into the storage space.
6. The transport refrigeration unit of clause 1, wherein in a defrost mode, the TRU is configured to circulate hot refrigerant from the compressor to the evaporator through a drain pan heater associated with the evaporator to enable defrosting of the drain pan and the evaporator coils.
7. The transport refrigeration unit of clause 1, wherein in a cooling mode, the TRU is configured to:
   circulate refrigerant from the compressor to the condenser, through the expansion device and the evaporator, and then return to the compressor; and
   enable the one or more fans to supply the air comprising return air towards the storage space while passing the air across the refrigerant-carrying evaporator coils to cool the air to a fourth temperature and further supply the cool air into the storage space.
8. The transport refrigeration unit of clause 1 wherein the compressor is fluidically connected to the condenser, and the drain pan heater and/or the evaporator coils associated with the evaporator by a three-way valve.
9. The transport refrigeration unit of clause 2, wherein the TRU comprises a controller in communication with the electric heater, a motor of the compressor, the one or more fans, the expansion device, and a battery associated with the TRU.
10. The transport refrigeration unit of clause 9, wherein the controller is configured to adjust speed of the compressor and/or adjust heating level of the electric heater based on one or more of a predefined temperature to be maintained at the storage space, ambient temperature, switching time between one or more heating modes and the cooling mode, defrosting speed of the evaporator coils, and a state of charge of the battery.
11. A refrigeration circuit of a transport refrigeration unit (TRU), the refrigeration circuit comprising:
   a variable speed compressor;
   a condenser downstream of the compressor;
   an expansion device downstream of the condenser;
   an evaporator downstream of the expansion device; and
   an electric heater configured upstream and/or downstream of the evaporator coils associated with the evaporator,
   wherein an outlet of the compressor is fluidically connected to the condenser, and evaporator coils of the evaporator.
12. The refrigeration circuit of clause 11, wherein the refrigeration circuit comprises one or more fans configured upstream and/or downstream of the evaporator and the electric heater, wherein the one or more fans are configured to facilitate flow of air through the evaporator and the electric heater.
13. The refrigeration circuit of clause 11, wherein in a first heating mode, the refrigeration circuit is configured to circulate hot refrigerant from the compressor to the evaporator coils and further enable the one or more fans to supply the air comprising return air towards a storage space associated with a trailer while passing the air across the hot refrigerant-carrying evaporator coils to heat the air to a first temperature and supply the heated air into the storage space.
14. The refrigeration circuit of clause 11, wherein in a second heating mode, the refrigeration circuit is configured to actuate the electric heater and further enable the one or more fans to supply the air comprising return air towards a storage space associated with a trailer while passing the air across the electric heater to heat the air to a second temperature and supply the heated air into the storage space.
15. The refrigeration circuit of clause 11, wherein in a third heating mode, the refrigeration circuit is configured to circulate hot refrigerant from the compressor to the evaporator coils and actuate the electric heater, and further enable the one or more fans to supply the air comprising return air towards a storage space associated with a trailer while passing the air across the hot refrigerant-carrying evaporator coils and the electric heater to heat the air to a third temperature and further supply the heated air into the storage space.
16. The refrigeration circuit of clause 11, wherein in a defrost mode, the refrigeration circuit is configured to circulate hot refrigerant from the compressor to the evaporator through a drain pan heater associated with the evaporator to enable defrosting of the drain pan and the evaporator coils.
17. The refrigeration circuit of clause 11, wherein in a cooling mode, the refrigeration circuit is configured to:
   circulate refrigerant from the compressor to the condenser, through the expansion device and the evaporator, and then return to the compressor; and
   enable the one or more fans to supply the air comprising return air towards a storage space associated with a trailer while passing the air across the refrigerant-carrying evaporator coils to cool the air to a fourth temperature and further supply the cool air into the storage space.
18. The refrigeration circuit of clause 11, wherein the compressor is fluidically connected to the condenser, and the drain pan heater and/or the evaporator coils associated with the evaporator by a three-way valve.
19. The refrigeration circuit of clause 12, wherein the refrigeration circuit comprises a controller in communication with the electric heater, a motor of the compressor, the one or more fans, the expansion device, and a battery associated with the TRU,
   wherein the controller is configured to adjust speed of the compressor and/or adjust heating level of the electric heater based on one or more of a predefined temperature to be maintained at the storage space, ambient temperature, switching time between one or more heating modes and the cooling mode, defrosting speed of the evaporator coils, and a state of charge of the battery.

## Claims

1. A transport refrigeration unit (TRU) comprising:
a variable speed compressor; and
an electric heater configured upstream and/or downstream of evaporator coils associated with an evaporator of the TRU,
wherein an outlet of the compressor is fluidically connected to the evaporator coils and a condenser of the TRU.

2. The transport refrigeration unit of claim 1, wherein the TRU comprises one or more fans configured upstream and/or downstream of the evaporator and/or the electric heater, wherein the one or more fans are configured to facilitate flow of air through the evaporator and the electric heater.

3. The transport refrigeration unit of claim 1 or 2, wherein in a first heating mode, the TRU is configured to circulate hot refrigerant from the compressor to the evaporator coils and further enable the one or more fans to supply air comprising return air towards a storage space while passing the air across the hot refrigerant-carrying evaporator coils to heat the air to a first temperature and further supply the heated air into the storage space.

4. The transport refrigeration unit of claim 1, 2 or 3, wherein in a second heating mode, the TRU is configured to actuate the electric heater and further enable the one or more fans to supply the air comprising return air towards the storage space while passing the air across the electric heater to heat the air to a second temperature and further supply the heated air into the storage space.

5. The transport refrigeration unit of any preceding claim, wherein in a third heating mode, the TRU is configured to circulate hot refrigerant from the compressor to the evaporator coils and actuate the electric heater, and further enable the one or more fans to supply the air comprising return air towards the storage space while passing the air across the hot refrigerant-carrying evaporator coils and the electric heater to heat the air to a third temperature and further supply the heated air into the storage space.

6. The transport refrigeration unit of any preceding claim, wherein in a defrost mode, the TRU is configured to circulate hot refrigerant from the compressor to the evaporator through a drain pan heater associated with the evaporator to enable defrosting of the drain pan and the evaporator coils.

7. The transport refrigeration unit of any preceding claim, wherein in a cooling mode, the TRU is configured to:
circulate refrigerant from the compressor to the condenser, through the expansion device and the evaporator, and then return to the compressor; and
enable the one or more fans to supply the air comprising return air towards the storage space while passing the air across the refrigerant-carrying evaporator coils to cool the air to a fourth temperature and further supply the cool air into the storage space.

8. The transport refrigeration unit of any preceding claim, wherein the compressor is fluidically connected to the condenser, and the drain pan heater and/or the evaporator coils associated with the evaporator by a three-way valve.

9. The transport refrigeration unit of any preceding claim, wherein the TRU comprises a controller in communication with the electric heater, a motor of the compressor, the one or more fans, the expansion device, and a battery associated with the TRU.

10. The transport refrigeration unit of claim 9, wherein the controller is configured to adjust speed of the compressor and/or adjust heating level of the electric heater based on one or more of a predefined temperature to be maintained at the storage space, ambient temperature, switching time between one or more heating modes and the cooling mode, defrosting speed of the evaporator coils, and a state of charge of the battery.

11. The transport refrigeration unit (TRU) of any preceding claim comprising a refrigeration circuit, the refrigeration circuit comprising:
the variable speed compressor;
the condenser downstream of the compressor;
an expansion device downstream of the condenser; and
the evaporator downstream of the expansion device.
